# EUROPEAN PATENT APPLICATION

(11) **EP 1 345 453 A1**
(43) Date of publication of application: **17.09.2003**
(21) Application number: 02005643.8
(22) Date of filing: 12.03.2002
(51) Int. Cl.: H04N 9/31, G02B 27/28

(54) **Light source for liquid crystal projector**

(71) Applicant: Chromagic Technologies Corporation, Taoyuan Hsian (TW)
(72) Inventor: Lo, Tsung-Fa, Kweishan, Taoyuan Hsian (TW)
(74) Representative: Viering, Jentschura & Partner

(57) **Abstract**

An engine module of the projector comprises at least a light generator, a polarized mirror, a light transmitter, a dichroic combiner, a prism and a frame. The light generator is employed to produce the required light. The polarized mirror is mounted at the output point of the light generator to polarize and divert the light. The transmitter mounted at the output point of the polarized mirror is to transmit the polarized light. The dichroic combiner installed at the output point of the transmitter is to separate the polarized light into three main lights, and then combine them together to make a mixed light again. The projector, outfitted at the output point of the dichroic combiner, is to send out the mixed light. The frame is to hold all components to form a complete projector.

## Description

### BACKGROUND OF THE INVENTION

### 1. Field of the Invention

This invention relates to a novel engine module for the projector, in particular, it has a compact and robust structure, easy for mass production with low production cost.

### 2. Description of the Prior Art

The projectors of the prior art are designed with numerous parts assembled at a fixed place. As a matter of fact, the projectors involve high technology, so their construction is significantly complicated and assembled with a great many of precisely designed parts. Since every piece of parts of projectors of the prior art is sophisticatedly designed, it requires more care, time and effort in assembling operation. A little negligence on assembly line would cause a big failure of the whole projector, that is the primary reason why the selling price of the prior art is maintained sky-high.

Regardless of how complicated and sophisticated the projectors of the prior art are, however, the parts arrangement and relative position are roughly similar, the unique difference lies on the size and model. The most important part of the projector is the engine module - an optical core of the projector, as far as the configuration is concerned, the pattern of the engine module remains for years with the slightest change. If these fixed patterns can be modularized, other parts are to be produced by other individual manufacturers, and the designed quality and performance are maintained, such division of scope of work certainly contributes to very low production cost as well as high productive efficiency.

### SUMMARY OF THE INVENTION

The object of the invention is to provide a novel engine module for the projector, mainly comprising modularized components, suitable for work and mass production so as to promote the productive efficiency.

Another object of the invention is to provide a novel engine module for the projector which is appropriate for assembling a great many of models of projectors so as to reduce the production cost to the maximum extent.

Another object of the invention is to provide a novel engine module for the projector. After so assembled, the projector would become compact, lightweight, robust construction with longer service life.

To achieve the aforementioned objects, the engine module of the projector shall comprise at least a light generator, a polarized mirror, a light transmitter, a dichroic combiner, a prism and a frame. The light generator is employed to produce the required light. The polarized mirror is mounted at the output point of the light generator to polarize and divert the light. The transmitter mounted at the output point of the polarized mirror is to transmit the polarized light. The dichroic combiner installed at the output point of the transmitter is to separate the polarized light into three main lights, and then combine them together to make a mixed light again. The projector, outfitted at the output point of the dichroic combiner, is to send out the mixed light. The frame is to hold all components to form a complete projector. The projector so assembled benefits from compact construction, easy production and consequential assembly and high efficiency.

### BRIEF DESCRIPTION OF THE DRAWINGS

The drawings disclose illustrative embodiments of the present invention, which serves to exemplify the various advantages and objects hereof, and are as follows:
Fig. 1 shows a disassembly of the engine module of a projector of the invention.
Fig. 2 shows a complete assembly of the engine module of a projector of the invention.
Fig. 3 shows the process flow of the engine module of a projector of the invention.

### DETAILED DESCRIPTION OF THE PREFERRED EMBODIMENT

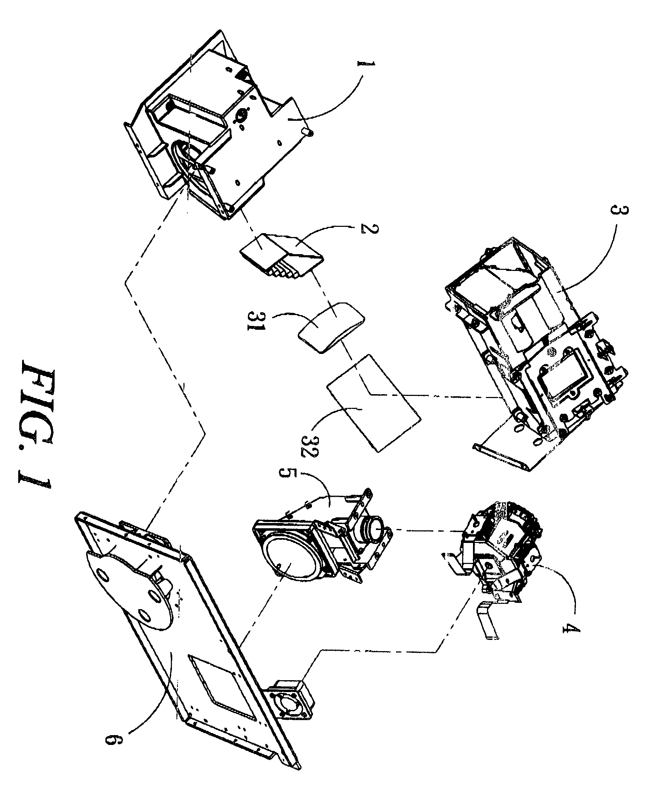

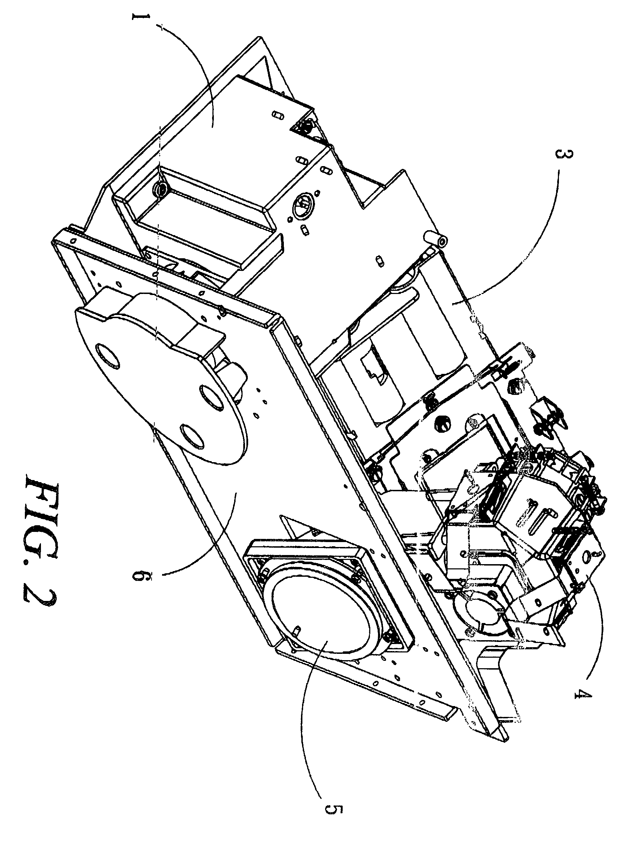

As shown in Figs. 1 and 2, the engine module of the invention mainly consists of a light generator 1, a polarized mirror 2, a light transmitter 3, a dichroic combiner 4, a prism 5 and a frame 6. The light generator 1 produces the required light. The polarized mirror 2 mounted at the output point of the light generator 1 is employed to polarize and divert the light coming out of the light generator 1. The light transmitter 3 outfitted at the output point of the polarized mirror 2 is to regulate and transmit the light coming out of the polarized mirror 2. The dichroic combiner 4 installed at the output point of the light transmitter 3 is to segregate the light coming out of the transmitter into three prime color lights and then combine them into a mixed light again. The prism 5 outfitted at the output point of the dichroic combiner 4 is to send out the mixed light coming out of the dichroic combiner 4. All components are interlocked and held on the frame 6 to form a complete projector of the invention.

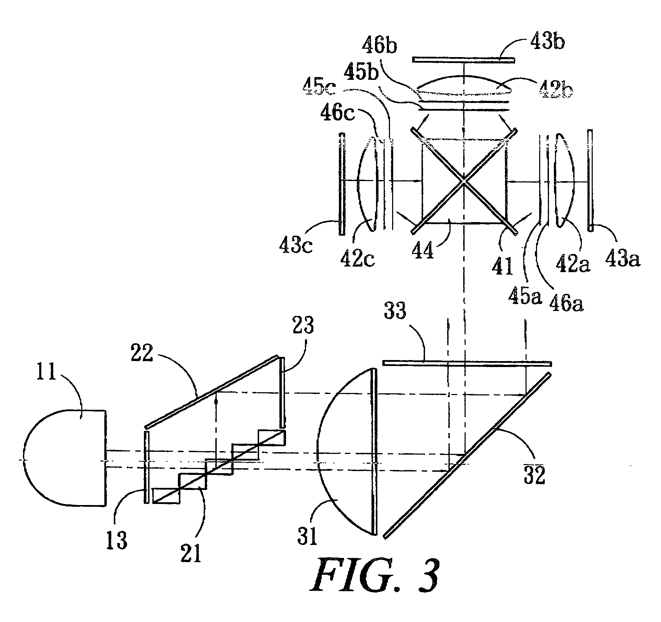

As shown in Fig. 3, the light generator 1 includes a lamp 11 to produce the required light source. An electric fan 12 is adjacent to the lamp 11 for dissipating the heat the lamp 11 produces. A UV-IR cut filter 13 is mounted to remove the infrared and ultra red rays contained in the light to gain the purity of the light. The polarized mirror 2 embraces a polarized beam separator 21 which segregates the light into P polarized light and S polarized light, of them the S polarized light is reflected by the mirror 22 and converted into the P polarized light by means of the retarder 23. The light transmitter 3 constitutes a first lens array 31, a mirror 32 and a second lens array 33. The first lens array 31 is to receive the P polarized light and enlarge the evenness of illumination area. The light is further reflected by the mirror 32 toward the second lens array 33, which makes the output light even and parallel. The dichroic combiner 4 contains a dichroic mirror 41, three sets of field lens 42a, 42b and 42c; three sets of LCD panels 43a, 43b, and 43c; and a combining prism 44, three pieces of polarizer 45a,45b,45c, and three pieces of retarder 46a,26b,46c. The dichroic mirror 41 is to segregate the input light into three prime colors: red, blue and green, which is filtered by there pieces of polarizer 45a, 45b, 45c to a single polarized light which is transferred phase by retarder 46b, 46c ;then the three prime colors is respectively reflected by three the field lenses 42a, 42b and 42c and finally toward three LCD panels 43a, 43b and 43c. After properly adjusted in the LCD panels, the three prime color lights are combined in the combining prism 44 and sent out by the prism 5.

Comparing technically with the prior art of the projector, the advantages the projector of the invention holds are:
1. The major components of the projector are easy for division of work, mass production with high productive efficiency.
2. The engine module is compatible with various models of projectors, so it results in cost saving to the greatest extent.
3. The projector provided in the invention is light weighted, compact, robust and having longer service life.

Many changes and modifications in the above-described embodiments of the invention can, of course, be carried out without departing from the scope thereof. Accordingly, to promote the progress in science and the useful arts, the invention is disclosed and is intended to be limited only by the scope of the appended claims.

## Claims

1. An engine module for a projector, mainly comprises:
a light generator to produce required light;
a polarized mirror mounted at an output point of said light generator to polarize and divert light;
a transmitter outfitted at an output point of said polarized mirror to regulate and transmit the light coming out of said polarized mirror;
a dichroic combiner installed at an output point of said transmitter to segregate light into three prime colors and then mix again into one light;
a prism assembled at an output point of said dichroic combiner to send out said mixed light; and
a frame to hold above-mentioned components in place for forming a complete projector.

2. The engine module for the projector of claim 1, wherein said light generator includes a lamp, an electric fan mounted adjacently to said lamp for dissipating heat produced by said lamp and a UV-IR cut filter.

3. The engine module for the projector of claim 1, wherein said polarized mirror contains PBS to separate light into P polarized light and S polarized light, of them, said S polarized light is reflected to a retarder to be converted into P polarized light.

4. The engine module for the projector of claim 1, wherein said transmitter contains a first lens array, a mirror and a second lens array, the first lens array A is to intensify evenness of in-coming light, said mirror is to divert light direction and said lens array B is to send out even and parallel light.

5. The engine module for the projector of claim 1, wherein said dichroic combiner consists of a dichroic mirror, three sets of field lenses, three sets of LCD panels, there pieces of polarizer, there pieces of retarder, and a combining prism; a said dichroic mirror is to segregate light into three prime colors that are filtered by polarizer and retarder, and transfered the phase; passed and adjusted by three sets of field lenses and three sets of LCD panels and then finally sent out as a mixed light by said combining prism.
